# EUROPÄISCHE PATENTSCHRIFT

(11) **EP 0 935 119 B1**
(45) Veröffentlichungstag und Bekanntmachung des Hinweises auf die Patenterteilung: **16.10.2002**
(21) Anmeldenummer: 99102215.3
(22) Anmeldetag: 04.02.1999
(51) Int. Cl.: G01B 5/255

(54) **Teleskopstab mit einer Gasfeder zur Einstellung der Spur an Kraftfahrzeugrädern**
Telescopic rod with a gas spring for adjusting toe of wheels of motor vehicles
Tige télescopique avec un ressort à gaz pour ajuster l'angle de pincement des roues de véhicules

(30) Priorität: 09.02.1998 DE 19805102
(43) Veröffentlichungstag der Anmeldung: 11.08.1999
(73) Patentinhaber: Snap-On Equipment GmbH, 64319 Pfungstadt (DE)
(72) Erfinder: Diez, Ulrich, 51580 Reichshof (DE)
(74) Vertreter: Nöth, Heinz, Dipl.-Phys.

(56) Entgegenhaltungen:
- EP-B- 0 556 258
- DE-B- 1 139 284
- DE-C- 859 531
- GB-A- 2 016 716
- US-A- 2 003 188
- US-A- 2 618 072

## Beschreibung

Die Erfindung betrifft eine Vorrichtung nach dem Oberbegriff des Patentanspruches 1.

Eine derartige Vorrichtung dient zum Einstellen der Spur an Kraftfahrzeugrädern und dem Vermessen von Kraftfahrzeugen, wobei ein in seiner Länge verstellbarer Stab, der eine Feder als Kraftspeicher aufweist, zum Aufbringen von Spreizkräften über zwei Stabenden auf zwei Fahrzeugräder, insbesondere die Vorderräder, vorgesehen wird. Eine derartige auch als Spurdrücker bezeichnete Vorrichtung soll eine bestimmte Vorspannkraft, beispielsweise 100 N, ausüben. Bei bekannten Vorrichtungen wird zur Erzeugung der Vorspannkraft eine mechanische Feder, insbesondere Schraubendruckfeder, verwendet. Bei unterschiedlichen Fahrzeugspurweiten ergeben sich ungenaue voneinander abweichende Spreizkräfte innerhalb des möglichen Hubes.

Aufgabe der Erfindung ist es, eine Vorrichtung der eingangs genannten Art zu schaffen, bei welcher über den gesamten Hub eine konstante Spreizkraft geliefert wird.

Diese Aufgabe wird erfindungsgemäß durch die kennzeichnenden Merkmale des Patentanspruches 1 gelöst.

Die Unteransprüche enthalten Weiterbildungen der Erfindung.

Bei der Erfindung wird als Kraftspeicher eine Gasfeder eingesetzt. Diese besitzt ein Gasfedergehäuse und eine in axialer Richtung aus dem Gasfedergehäuse mit bestimmter Kraft, beispielsweise 100 N, ausschiebbaren Kolbenstange. Die Kolbenstange und das Gasfedergehäuse sind mit den beiden Stabenden zumindest in axialer Richtung starr verbunden. Ferner wird die Kolbenstange bei ihrer Hubbewegung aus dem Gasfedergehäuse an einer Axialführungseinrichtung des teleskopartig verstellbaren Stabes in radialer Richtung abgestützt. Hierdurch wird gewährleistet, daß auf die relativ dünn ausgebildete Kolbenstange nur in axialer Richtung, in welcher im wesentlichen die Federkraft übertragen wird, Kräfte einwirken.

Das eine Gehäuseende des Gasfedergehäuse kann bei einem Ausführungsbeispiel an dem einen Rad, beispielsweise dem linken Vorderrad, des Kraftfahrzeuges angedrückt werden. Das Gehäuseende bildet dabei das eine Stabende. Das freie Ende der Kolbenstange kann an der stabförmigen, insbesondere als Rohr ausgebildeten Führungseinrichtung, befestigt bzw. abgestützt sein. Das Gasfedergehäuse kann in axialer Richtung mit einer bestimmten Hublänge an der Führungseinrichtung, insbesondere an einem Ende der Führungseinrichtung, geführt sein. Das andere Ende der Führungseinrichtung kann an das andere Rad, beispielsweise rechte Vorderrad, des Kraftfahrzeuges mit einem Ende, welchs das andere Stabende bildet, angedrückt werden.

Ferner sind Ausführunsformen möglich, bei denen die Gasfeder mit ihrem Gasfedergehäuse an der Führungseinrichtung abgestützt ist. Die Führungseinrichtung ist mit ihrem einen Ende, welches ein Stabende des teleskopierbaren Stabes bildet, am einen Rad abstützbar. Die Kolbenstange ist mit dem am anderen Rad abstützbaren Stabende verbunden. Hierzu kann die Kolbenstange direkt mit dem Stabende verbunden sein, wobei die Kolbenstange in radialer Richtung an der Führungseinrichtung bei ihrer axialen Bewegung abgestützt ist, oder das Stabende besitzt einen oder mehrere Führungsteile, welche in axialer Richtung mit Formschluß an der Führungseinrichtung verschiebbar sind.

Die Führungseinrichtung kann rohrförmig ausgebildet sein, wobei bei der Ausführungsform, bei welcher das Gasfedergehäuse an der Führungseinrichtung abgestützt ist, das Gasfedergehäuse innerhalb der rohrförmigen Führungseinrichtung angeordnet wird.

Hierdurch wird über den gesamten in der Praxis vorkommenden Spurweitenbereich eine nahezu konstante Vorspannkraft von 100 N gewährleistet.

Anhand der Figuren wird an einem Ausführungsbeispiel die Erfindung noch näher erläutert. Es zeigt:
- Fig. 1:: in teilweiser schnittbildlicher Darstellung ein Ausführungsbeispiel;
- Fig. 2:: das in Fig. 1 dargestellte Ausführungsbeispiel beim Einsatz als Spurdrücker an zwei vorderen Rädern eines Kraftfahrzeugs;
- Fig. 3:: ein zweites Ausführungsbeispiel in schnittbildlicher Darstellung; und
- Fig. 4:: ein drittes Ausführungsbeispiel in schnittbildlicher Darstellung.

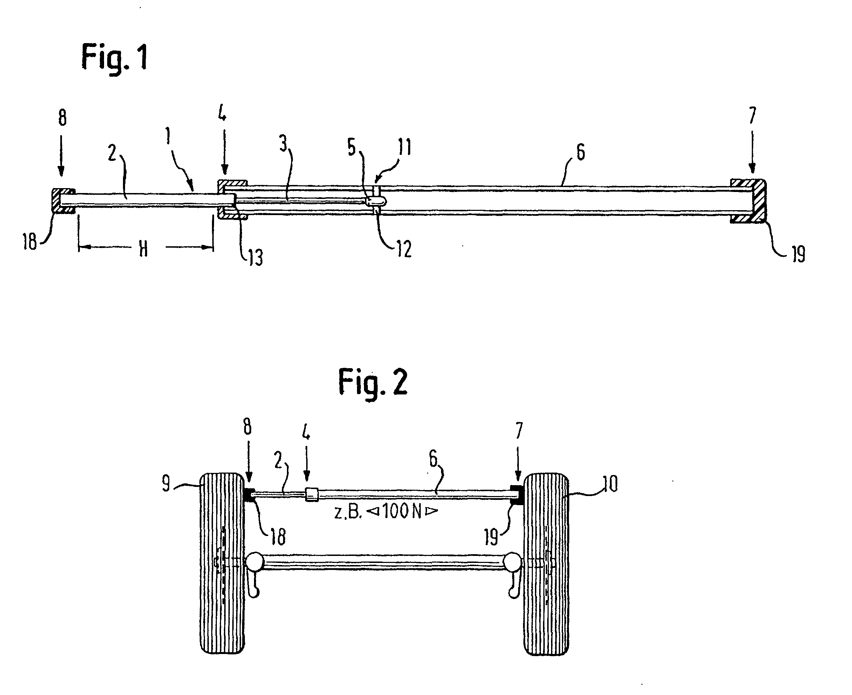

Das in Fig. 1 dargestellte Ausführungsbeispiel eines Spurdrückers besitzt als Kraftspeicher eine Gasfeder 1. Die Gasfeder 1 besteht aus einem zylindrischen rohrförmigen Gasfedergehäuse 2 und einer axial verschiebbaren Kolbenstange 3, die aus dem einen Ende des Gasfedergehäuses 2 herausragt. Auf die Kolbenstange wirkt eine bestimmte Vorspannkraft, die in bekannter Weise durch eine hydropneumatische Einrichtung im Gasfedergehäuse 2 erzeugt wird. Diese Vorspannkraft kann ca. 100 N betragen.

Ein freies Ende 5 der Kolbenstange 3 ist an einer stabförmigen Führungseinrichtung 6, an welcher das Gasfedergehäuse 2 in axialer Richtung geführt ist, an einer Befestigungsstelle 11 befestigt. Die Befestigungsstelle 11 kann zwei diametral zueinander liegende Befestigungspunkte für das freie Ende 5 der Kolbenstange 3 aufweisen. Hierzu kann ein querverlaufender Stift 12 vorgesehen sein, über welchen das freie Ende der Kolbenstange 3 an der Führungseinrichtung 6 abgestützt ist. Der Abstand der Befestigungsstelle 11 von einem Ende 4 der Führungseinrichtung 6 entspricht mindestens der Hublänge H, mit welcher die Kolbenstange 3 aus dem Gasfedergehäuse 2 herausschiebbar ist. Bei vollständig herausgeschobener Kolbenstange 3 wird ein Ende 13 des Gasfedergehäuses 2 noch in der Führungseinrichtung 6 im Bereich des Endes 4 der Führungseinrichtung 6 gehalten. Das Gasfedergehäuse 2 wird bei diesem Ausführungsbeispiel teleskopartig am Ende 4 der Führungseinrichtung 6 geführt. Die stabförmig ausgebildete Führungseinrichtung 6 kann als Rohr ausgebildet sein. Es kann sich um ein geschlitztes Rohr 6 oder ein Rohr mit vollem Rohrmantel oder ein rohrförmiges Korsett handeln. Die Führungseinrichtung 6 umfaßt einen Hohlraum, in welchem die Kolbenstange sich axial erstreckt und in welches das Gasfedergehäuse 2 mit der Hublänge H gegen die Vorspannkraft des Gasfederspeichers eingeschoben werden kann.

Ein freies Gehäuseende des Gasfedergehäuses 2 kann mit einer Druckkappe 18, z.B. aus Kunststoff, Hartgummi oder dergl., ausgestattet sein. Das Gehäuseende kann, wie aus der Fig. 2 zu ersehen ist, gegen ein Vorderrad 9, beispielsweise das linke Vorderrad, eines Kraftfahrzeugs angedrückt werden und hierdurch als ein Stabende 8 des teleskopierbaren Stabes ausgebildet sein. Gegen das andere Vorderrad 10 kann ein Stabende 7 an der Führungseinrichtung 6, welches ebenfalls mit einer Druckkappe 19 versehen ist, angedrückt werden. Die Druckkappen 18 und 19 werden dabei an die Innenflächen der Reifen der beiden Räder 9 und 10 angedrückt, wie es die Fig. 2 zeigt. Der Kraftspeicher der Gasfeder 1 übt dabei eine Spreizwirkung über die beiden Stabenden 7 und 8 auf die beiden Räder aus. Da die Vorspannkraft, welche von der Gasfeder 1 innerhalb der Hublänge H geliefert wird, über den in der Praxis vorkommenden Fahrzeugspurweitenbereich eine konstante Kraft liefert, erreicht man mit dem beschriebenen Spurdrücker eine hohe Genauigkeit bei der Fahrzeugvermessung und der Spureinstellung.

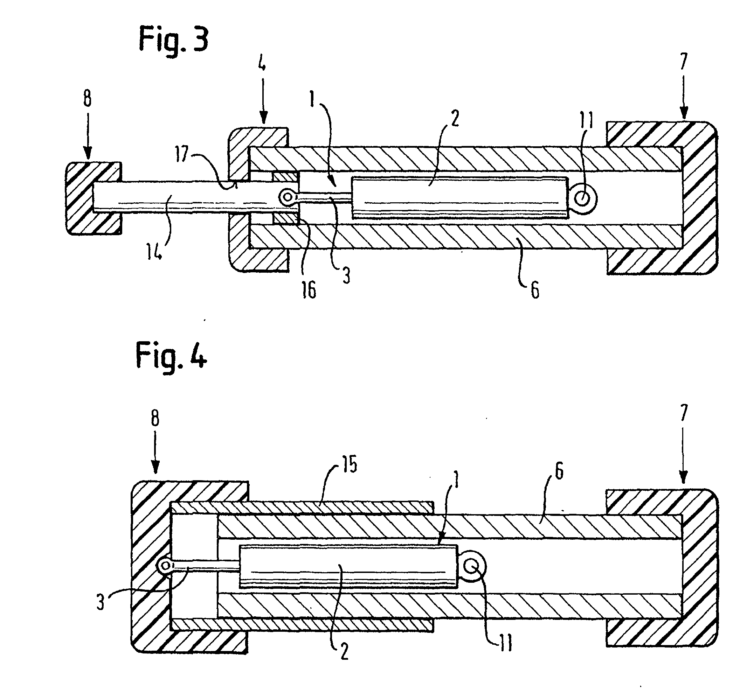

In den Figuren 3 und 4 sind schematisch weitere Ausführungsbeispiele schnittbildlich dargestellt. Bei diesen Ausführungsbeispielen ist die Gasfeder 1 im Innern der rohrförmigen Führung 6 angeordnet und an der Befestigungsstelle 11 an der Führungseinrichtung 6 abgestützt bzw. befestigt. Das eine Ende der Führungseinrichtung 6 ist als das eine Stabende ausgebildet, das an das eine Kraftfahrzeugrad beim Spreizen angedrückt werden kann. Das andere Ende 8 ist mit der Kolbenstange 3, welche um eine bestimmte Hublänge mit im wesentlichen konstanter Druckkraft aus dem Gasfedergehäuse 2 ausgeschoben werden kann, verbunden. Bei dem in der Fig. 3 dargestellten Ausführungsbeispiel ist die Kolbenstange 3 über einen Stößel 14, welcher an der Führungseinrichtung 6 in axialer Richtung geführt ist, mit dem anderen Stabende 8 verbunden. Bei der Ausführungsform der Fig. 4 erfolgt die Verbindung der Kolbenstange 3 direkt mit dem in axialer Richtung verschiebbaren Stabende 8. Auch bei diesen Ausführungsbeispielen sind die Stabenden 7 und 8 in Form von Kunststoffkappen oder dergl. ausgebildet.

Die axiale Führung des Stößels 14 wird beim Ausführungsbeispiel der Fig. 3 durch zwei Abstützstellen erreicht, an denen der Stößel in radialer Richtung an der Führungseinrichtung 6 abgestützt ist. Beim dargestellten Ausführungsbeispiel der Fig. 3 ist an dem Ende des Stößels 14, welches mit der Kolbenstange 3 verbunden ist, eine kolbenartige Erweiterung 16 vorgesehen, die an der Innenwand der rohrförmigen Führungseinrichtung 6 in axialer Richtung verschiebbar anliegt. Als weitere axiale Abstützstelle ist am Ende 4 der Führungseinrichtung 6 in der Verschlußkappe eine Führungsbohrung 17 vorgesehen, in welcher der Stößel 14 radial abgestützt und axial verschiebbar geführt ist. Hierdurch wird gleichzeitig eine radiale Abstützung der Kolbenstange 3 erreicht. Über die Kolbenstange 3 wird daher im wesentlichen nur in axialer Richtung die Federkraft auf das Stabende 8 übertragen.

Bei dem in der Fig. 4 dargestellten Ausführungsbeispiel ist mit dem Stabende 8 ein Führungsteil 15 starr verbunden. Das Führungsteil 15 ist mit Formschluß und in axialer Richtung verschiebbar an der Führungseinrichtung 6 gelagert. Gleichzeitig gewährt das Führungsteil 15 in radialer Richtung eine Abstützung des Stabendes 8 an der Führungseinrichtung 6. Hierdurch wird gleichzeitig eine radiale Abstützung für die Kolbenstange 3 an der Führungseinrichtung 6 erreicht, so daß von der Kolbenstange 3 im wesentlichen nur in axialer Richtung die von der Gasfeder 1 vermittelte Federkraft auf das Stabende 8 übertragen wird. Beim dargestellten Ausführungsbeispiel der Fig. 4 liegt das rohrförmig ausgebildete Führungsteil 15 an der Außenseite der rohrförmig ausgebildeten Führungseinrichtung 6 an. Es ist jedoch auch möglich, daß sowohl die Führungseinrichtung 6 als auch das Führungsteil 15 als geschlitzte Führungsrohre vorliegen, welche mit ihren Führungsfingern ineinandergreifen.

## Patentansprüche

1. Vorrichtung zur Einstellung der Spur an Kraftfahrzeugrädern mit einem in axialer Richtung teleskopartig verstellbaren Stab, der einen als Feder ausgebildeten Kraftspeicher zum Aufbringen von Spreizkräften über zwei Stabenden auf zwei an unterschiedlichen Fahrzeugseiten angeordneten Kraftfahrzeugrädern aufweist,
**dadurch gekennzeichnet ,**
**daß** der Kraftspeicher als Gasfeder (1) mit einem Gasfedergehäuse (2) und einer in axialer Richtung aus dem Gasfedergehäuse (2) mit bestimmter Kraft entlang einer bestimmten Hublänge bewegbaren Kolbenstange (3) ausgebildet ist, daß die Kolbenstange (3) und das Gasfedergehäuse (2) mit den beiden Stabenden (7, 8) zumindest in axialer Richtung starr verbunden sind und daß die Kolbenstange (3) bei ihrer Hubbewegung aus dem Gasfedergehäuse (2) an einer Führungseinrichtung (6) des Stabes in radialer Richtung abgestützt ist.

2. Vorrichtung nach Anspruch 1, **dadurch gekennzeichnet**, das das Gasfedergehäuse (2) an dem einen Rad (9) abstützbar ist, daß die Kolbenstange (3) an der Führungseinrichtung (6) an einer Befestigungsstelle (11) befestigt ist, daß das Gasfedergehäuse (7) in axialer Richtung mit einer bestimmten Hublänge (H) an der Führungseinrichtung (6) verschiebbar geführt ist und daß die Führungseinrichtung (6) am anderen Rad (10) abstützbar ist.

3. Vorrichtung nach Anspruch 1, **dadurch gekennzeichnet, daß** der Abstand der Befestigungsstelle (11) vom zweiten Ende (4) der Führungseinrichtung (6) mindestens der Hublänge (H) entspricht.

4. Vorrichtung nach einem der Ansprüche 1 bis 3, **dadurch gekennzeichnet, daß** die Kolbenstange (3) mit ihrem freien Ende (5) an mindestens zwei diametral zueinander liegenden Stellen der Führungseinrichtung (6) abgestützt ist.

5. Vorrichtung nach einem der Ansprüche 1 bis 4, **dadurch gekennzeichnet, daß** die Führungseinrichtung (6) einen Hohlraum aufweist, in welchem die Kolbenstange (3) angeordnet ist und in welchem das Gasfedergehäuse (2) verschiebbar ist.

6. Vorichtung nach Anspruch 1, **dadurch gekennzeichnet, daß** die Gasfeder mit ihrem Gasfedergehäuse (2) an der Führungseinrichtung (6), welche mit dem einen Stabende (7) an einem Rad abstützbar ist, befestigt ist und die Kolbenstange (3) mit dem am anderen Rad abstützbaren Stabende (8) verbunden ist.

7. Vorrichtung nach Anspruch 6, **dadurch gekennzeichnet, daß** das mit der Kolbenstange (3) verbundene Stabende (8) bei seiner axialen Bewegung an der Führungseinrichtung (6) in radialer Richtung abgestützt ist.

8. Vorrichtung nach Anspruch 6 oder 7, **dadurch gekennzeichnet, daß** die Kolbenstange (3) über einen an der Führungseinrichtung (6) in axialer Richtung geführten Stößel (14) mit dem Stabende (8) verbunden ist.

9. Vorrichtung nach einem der Ansprüche 6 bis 8, **dadurch gekennzeichnet, daß** das mit der Kolbenstange (3) verbundene Stabende (8) starr mit wenigstens einem Führungsteil (15) verbunden ist, das in axialer Richtung verschiebbar einen Formschluß mit der Führungseinrichtung (6) aufweist.

10. Vorrichtung nach einem der Ansprüche 1 bis 9, **dadurch gekennzeichnet, daß** die Führungseinrichtung (6) rohrförmig ausgebildet ist.

## Claims

1. Apparatus for adjusting the tracking on motor vehicle wheels comprising a bar which is telescopically displaceable in the axial direction and which has a force storage means in the form of a spring for applying spreading forces by way of two bar ends to two motor vehicle wheels arranged at different sides of a vehicle, **characterised in that** the force storage means is in the form of a gas spring (1) with a gas spring housing (2) and a piston rod (3) which is movable in the axial direction out of the gas spring housing (2) with a given force along a given force along a given stroke length, that the piston rod (3) and the gas spring housing (2) are connected rigidly at least in the axial direction to the two bar ends (7, 8) and that in its stroke movement out of the gas spring housing (2) the piston rod (3) is supported in the radial direction at a guide means (6) of the bar.

2. Apparatus according to claim 1 **characterised in that** the gas spring housing (2) can be supported at the one wheel (9), that the piston rod (3) is fixed to the guide means (6) at a fixing location (11), that the gas spring housing (7) is guided displaceably in the axial direction with a given stroke length (H) at the guide means (6) and that the guide means (6) can be supported at the other wheel (10).

3. Apparatus according to claim 1 **characterised in that** the spacing of the fixing location (11) from the second end (4) of the guide means (6) corresponds at least to the stroke length (H).

4. Apparatus according to one of claims 1 to 3 **characterised in that** the piston rod (3) is supported with its free end (5) at at least two diametrally disposed locations of the guide means (6).

5. Apparatus according to one of claims 1 to 4 **characterised in that** the guide means (6) has a hollow space in which the piston rod (3) is arranged and in which the gas spring housing (2) is displaceable.

6. Apparatus according to claim 1 **characterised in that** the gas spring is fixed with its gas spring housing (2) to the guide means (6) which can be supported with one bar end (7) against one wheel and the piston rod (3) is connected to the bar end (8) which can be supported against the other wheel.

7. Apparatus according to claim 6 **characterised in that** in its axial movement the bar end (8) which is connected to the piston rod (3) is supported in the radial direction at the guide means (6).

8. Apparatus according to claim 6 or claim 7 **characterised in that** the piston rod (3) is connected to the bar end (8) by way of a thrust member (14) guided in the axial direction at the guide means (6).

9. Apparatus according to one of claims 6 to 8 **characterised in that** the bar end (8) connected to the piston rod (3) is rigidly connected to at least one guide portion (15) which displaceably in the axial direction involves positively locking engagement with the guide means (6).

10. Apparatus according to one of claims 1 to 9 **characterised in that** the guide means (6) is tubular.

## Revendications

1. Dispositif pour régler l'écartement des roues de véhicules à moteur, comportant une barre pouvant être réglée télescopiquement en direction axiale, laquelle comprend un accumulateur de force réalisé sous forme de ressort pour appliquer des forces d'écartement par l'intermédiaire de deux extrémités de barre sur deux roues de véhicule à moteur disposées sur des côtés différents du véhicule,
**caractérisé en ce que** l'accumulateur de force est réalisé sous forme de ressort (1) à gaz doté d'un boîtier (2) de ressort à gaz et d'une tige (3) de piston pouvant être déplacée en direction axiale en dehors du boîtier (2) de ressort à gaz avec une force donnée et sur une longueur de course donnée, **en ce que** la tige (3) de piston et le boîtier (2) de ressort à gaz sont reliés rigidement au moins en direction axiale aux deux extrémités (7,8) de la barre, et **en ce que** la tige (3) de piston, lors de sa course de déplacement en dehors du boîtier (2) de ressort à gaz, s'appuie en direction radiale contre un moyen (6) de guidage de la barre.

2. Dispositif suivant la revendication 1, **caractérisé en ce que** le boîtier (2) de ressort à gaz peut s'appuyer contre l'une (9) des roues, **en ce que** la tige (3) de piston est fixée en un emplacement (11) de fixation au moyen (6) de guidage, **en ce que** le boîtier (2) de ressort à gaz est guidé par le moyen (6) de guidage à coulissement en direction axiale sur une longueur (H) de course donnée, et **en ce que** le moyen (6) de guidage peut s'appuyer contre l'autre roue (10).

3. Dispositif suivant la revendication 1, **caractérisé en ce que** la distance entre l'emplacement (11) de fixation et la deuxième extrémité (4) du moyen (6) de guidage est au moins égale à la longueur (H) de course.

4. Dispositif suivant l'une des revendications 1 à 3, **caractérisé en ce que** la tige (3) de piston s'appuie par son extrémité (5) libre en au moins deux points diamétralement opposés du moyen (6) de guidage.

5. Dispositif suivant l'une des revendications 1 à 4, **caractérisé en ce que** le moyen (6) de guidage comporte une cavité dans laquelle est disposée la tige (3) de piston et dans laquelle le boîtier (2) de ressort à gaz peut coulisser.

6. Dispositif suivant la revendication 1, **caractérisé en ce que** le ressort à gaz est fixé par son boîtier (2) de ressort à gaz au moyen (6) de guidage, qui peut s'appuyer par l'une (7) des extrémités de la barre contre une roue, et la tige (3) de piston est reliée à l'extrémité (8) de la barre qui peut s'appuyer contre l'autre roue.

7. Dispositif suivant la revendication 6, **caractérisé en ce que** l'extrémité (8) de la barre qui est reliée à la tige (3) de piston est, lors de son mouvement axial, soutenue en direction radiale contre le moyen (6) de guidage.

8. Dispositif suivant la revendication 6 ou 7, **caractérisé en ce que** la tige (3) de piston est reliée à l'extrémité (8) de la barre par l'intermédiaire d'un coulisseau (14) guidé en direction axiale par le moyen (6) de guidage.

9. Dispositif suivant l'une des revendications 6 à 8, **caractérisé en ce que** l'extrémité (8) de la barre qui est reliée à la tige (3) de piston est reliée rigidement à au moins un élément (15) de guidage, qui se trouve en engagement positif à coulissement en direction axiale avec le moyen (6) de guidage.

10. Dispositif suivant l'une des revendications 1 à 9, **caractérisé en ce que** le moyen (6) de guidage est réalisé tubulaire.
